# EUROPEAN PATENT SPECIFICATION

(11) **EP 2 909 916 B1**
(45) Date of publication and mention of the grant of the patent: **18.10.2017**
(21) Application number: 12886851.0
(22) Date of filing: 18.10.2012
(51) Int. Cl.: F21Y 115/10, H02J 9/06, F21S 9/02, H05B 33/08, H05B 37/02, F21K 99/00

(54) **LED TUBE FOR EMERGENCY LIGHTING SYSTEM**
LED-RÖHRE FÜR EIN NOTBELEUCHTUNGSSYSTEM
TUBE À DEL POUR SYSTÈME D'ÉCLAIRAGE D'URGENCE

(43) Date of publication of application: 26.08.2015
(73) Proprietor: Aztech Technologies PTE LTD, Singapore 408694 (SG)
(72) Inventor: SAW, Chwee Meng, Singapore 465599 (SG)
(74) Representative: Viering, Jentschura & Partner mbB Patent- und Rechtsanwälte
(86) International application number: PCT/SG2012/000387
(87) International publication number: WO 2014/062130

(56) References cited:
- EP-B1- 0 813 285
- CN-U- 202 310 219
- GB-A- 2 489 505
- US-A1- 2011 133 655
- US-B2- 8 258 705

## Description

### Technical Field

Various embodiments relate generally to a lamp and a lamp system including a lamp and a power supply system coupled to the lamp.

### Background

Emergency lighting is lighting for an emergency situation when the main power supply fails. The loss of mains electricity could be the result of a fire or a power cut and the normal lighting supplies fail. This may lead to sudden darkness and a possible danger to the occupants, either through physical danger or panic.

Emergency lighting is normally required to operate fully automatically and give illumination of a sufficiently high level to enable persons of all ages to evacuate the premises safely. Most new buildings now have emergency lighting installed during construction.

In an emergency lighting system, if the light source is a fluorescent tube and in order to light up the fluorescent tube from a battery, a designated amount of power is required. Since fluorescent tube is not an energy efficient light source, it would be difficult to extend the duration of luminance of the light source without increasing the battery capacity and indirectly the form factor and space required.

Therefore, there is a need to provide for an alternative light source or lamp which may overcome or at least alleviate some of the above-mentioned problems.

GB2489505 discloses a lighting device including light source and primary and secondary power connections for receiving power from primary and secondary power supplies. The lighting device further includes an electronic circuitry to control power delivery to the light source such that in event of power failure from the primary power connection, power from the secondary power connection is used to power the light source. CN202310219 discloses a lighting device including a main power supply, an emergency power supply, and an LED module powered by the main power supply when a power source supplies power to the main power supply and powered by the emergency power supply when the power source stops supplying power to the main power supply.

### Summary

In various embodiments, a lamp is provided. The lamp includes a light source; and a control circuitry coupled to the light source. The control circuitry includes an input configured to receive power from a main power supply and, alternatively, from a secondary power supply; an output connected to the light source for supplying an electrical current to the light source; a determining block connected to the input and configured to determine, when the lamp is in use, whether the power received at the input is from the main power supply or the secondary power supply and to generate a corresponding determined signal; a control block coupled to the determining block and configured to receive the determined signal and to generate a control signal based on the determined signal; and a conversion block coupled between the input and the output and configured to receive the control signal and to convert the power from the main power supply or the secondary power supply to the electrical current, wherein the intensity of the electrical current is controlled by the control signal.

In various embodiments, a lamp system is provided. The lamp system includes a lamp; and a power supply system coupled to the lamp.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
Figure 1 shows a lamp system including a lamp and a power supply system coupled to the lamp according to an embodiment;
Figure 2 shows a lamp according to an embodiment;
Figure 3 shows a power supply system according to an embodiment.

### Detailed Description

The following detailed description refers to the accompanying drawings that show, by way of illustration, specific details and embodiments in which the invention may be practised. These embodiments are described in sufficient detail to enable those skilled in the art to practice the invention. Other embodiments may be utilized and structural, logical, and electrical changes may be made without departing from the scope of the invention. The various embodiments are not necessarily mutually exclusive, as some embodiments can be combined with one or more other embodiments to form new embodiments.

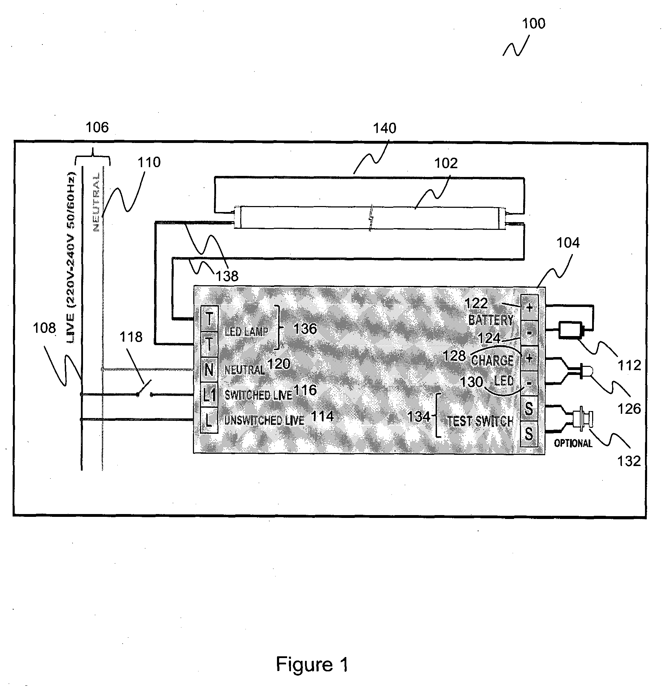

Fig. 1 shows a lamp system 100 including a lamp 102 and a power supply system 104 coupled to the lamp 102 according to an embodiment.

The power supply system 104 is configured to receive power from a main power supply 106 via a live connection 108 and a neutral connection 110. In an embodiment, the main power supply 106 may include an AC power supply and the live connection 108 may include a voltage of between about 220V to 240V at a frequency of about 50Hz or 60Hz. Any other suitable voltage and frequency may be used as the live connection 108.

The live connection 108 may be supplied directly and continuously to an UNSWITCHED LIVE (L) terminal 114 in the power supply system 104 so as to allow the power supply system 104 to function as an emergency light fitting to recharge a secondary power supply 112 even when the lamp 102 is switched off. In addition, the live connection 108 may also be supplied to a SWITCHED LIVE (L1) terminal 116, but this is supplied via a switch 118 so as to control the connection of the live connection 108 to the SWITCHED LIVE terminal 116 and to activate the switch 118 only whenever there is a need to supply the power to the lamp 102. Further, the neutral connection 110 may be supplied to a NEUTRAL (N) terminal 120 in the power supply system 104 and configured to connect this NEUTRAL terminal 120 as electrical current return path.

Alternatively, the power supply system 104 is also configured to receive power from the secondary power supply 112, for example a DC power supply or a battery. In the example of the battery 112 as shown in Fig. 1, one end of the battery 112 may be coupled to a positive battery terminal (+) 122 in the power supply system 104 and another end of the battery 112 may be coupled to a negative battery terminal (-) 124 in the power supply system 104. Any suitable DC power supply or battery may be used in the power supply system 104 depending on user and design requirements.

The power supply system 104 is configured to provide the power from either the main power supply 106 or alternatively, from the battery 112 to the lamp 102. The power supply system 104 is configured such that the power output from the power supply system 104 is determined by the electrical current (not shown) supplied to the light source (not shown) within the lamp 102.

In an embodiment, the power supply system 104 is coupled to a charge LED 126 which is configured to provide an indication as to whether there is a live connection 108 being supplied to the power supply system 104 or in particular, whether the battery 112 is being charged by the live connection 108. The charge LED 126 will light up as long as the battery 112 is being charged by the power from the live connection 108. The charge LED 126 is coupled to the power supply system 104 via a positive charge (+) LED terminal 128 and a negative charge (-) LED terminal 130 on the power supply system 104.

In an embodiment, the power supply system 104 may also be coupled to a test switch 132 configured to test the condition of the power supply system 104 during normal maintenance activity. The test switch 132 includes two ends respectively coupled to two test switch terminals (S) 134 on the power supply system 104. In an embodiment, the test switch 132 may be optional depending on user and design requirements.

In an embodiment, the power supply system 104 further includes two LED lamp terminals (T) 136 configured to be coupled via respective power supply-to-lamp wiring connections 138 to the respective two ends of the lamp 102. In addition, the respective two ends of the lamp 102 are also being coupled together via lamp-to-lamp wiring connection 140.

The arrangement of the positions of the respective UNSWITCHED LIVE terminal (L) 114, the SWITCHED LIVE (L1) terminal 116, the neutral terminal 120, the LED lamp terminals 136, the battery terminals 122, 124, the charge LED terminals 128, 130 and the test switch terminals 134 are not limited to that as arranged in Fig. 1 and may be arranged in any other suitable arrangement depending on user and design requirements.

In an embodiment, the power supply system 104 may be termed as an emergency LED control gear as it indirectly controls the type of power which is supplied to the lamp 102.

In an embodiment, the lamp 102 is a custom design light emitting diode (LED) T8 tube. The lamp 102 is able to operate both in alternating current (AC) voltage and in direct current (DC) voltage depending whether the power is supplied from the main power supply 106 or from the secondary power supply 112. When the lamp 102 is operating in the AC voltage, the lamp 102 is configured to output about 100% of the light and when operating in DC voltage, the lamp 102 will reduce the light output to a reduced amount of X% depending on requirements. The value of X may range between 0 to less than 100. By operating in a reduced power mode, the lamp 102 is able to operate longer when powered by the secondary power supply 112, for example a battery.

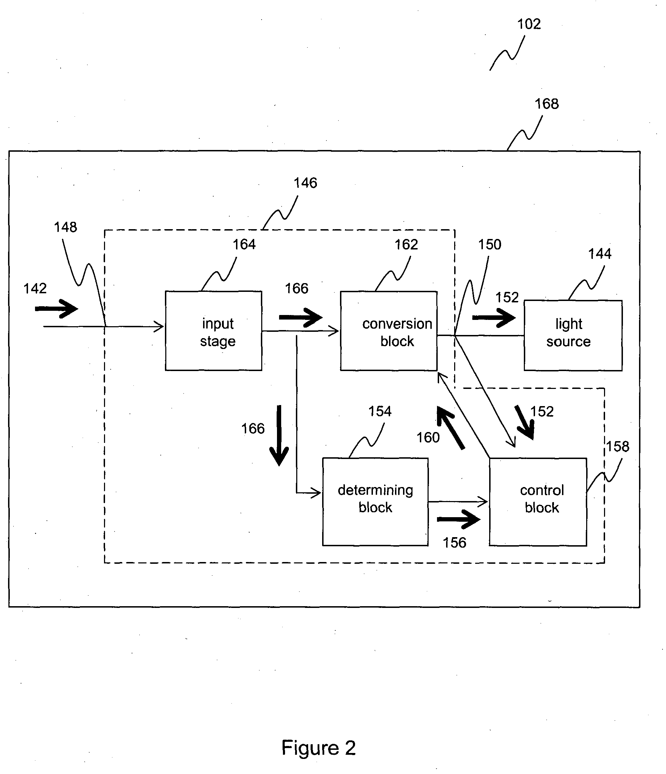

Fig. 2 shows a lamp 102 according to an embodiment. The lamp 102 includes a light source 144; and a control circuitry 146 coupled to the light source 144. The control circuitry 146 includes an input 148 configured to receive power 142 from a main power supply (not shown) and, alternatively, from a secondary power supply (not shown); an output 150 connected to the light source 144 for supplying an electrical current 152 to the light source 144; a determining block 154 connected to the input 148 and configured to determine, when the lamp 102 is in use, whether the power 142 received at the input 148 is from the main power supply or the secondary power supply and to generate a corresponding determined signal 156; a control block 158 coupled to the determining block 154 and configured to receive the determined signal 156 and to generate a control signal 160 based on the determined signal 156; and a conversion block 162 coupled between the input 148 and the output 150 and configured to receive the control signal 160 and to convert the power 142 from the main power supply or the secondary power supply to the electrical current 152 to be supplied to the light source 144, wherein the intensity of the electrical current 152 being supplied to the light source 144 is controlled by the control signal 160. In addition, the electrical current 152 is also fed back to the control block 158 to modify the control signal 160 so as to regulate the intensity of the electrical current 152 fed to the light source 144.

In Fig. 2, the control circuitry 146 further includes an input stage 164 coupled between the input 148 of the control circuitry 146 on one end and the conversion block 162 and the determining block 154 on another end, the input stage 164 configured to receive and process the power 142 from the main power supply or the secondary power supply to generate a processed power signal 166 to be fed to the conversion block 162 and the determining block 154. The input stage 164 includes at least one or a combination of discrete components including a filter, an overload protection circuit and a rectifier.

In an embodiment, the filter may include an electromagnetic interference (EMI) filter which is a passive electronic device including multiple components for suppressing conducted interference found on any signal or power line. The EMI filter will suppress the interference created by other blocks and the interference of the input stage or system, with the desired result being improvement to the immunity from EMI signals in the surrounding setting.

In an embodiment, the overload protection circuit may include an overvoltage protection circuit or an overcurrent protection circuit and the rectifier may include a bridge rectifier.

In an embodiment, the main power supply may include an AC power supply and the secondary power supply may include a DC power supply or a battery.

In an embodiment, the light source 144 may be an electrical current driven light source. The light source 144 may be a light-emitting diode (LED).

In an embodiment, the conversion block 162 may include an AC to DC voltage to current converter to convert power 142 from the AC power supply to the DC electrical current, and a DC to DC voltage to current converter to convert power 142 from the DC power supply to the DC electrical current. The AC to DC voltage to current converter and the DC to DC voltage to current converter consist of a power conversion integrated circuit (IC).

In an embodiment, the intensity of the electrical current 152 being supplied to the light source 144 controls the brightness of the lamp 102.

In an embodiment, the lamp 102 further includes a housing 168, wherein the light source 144 and the control circuitry 146 are arranged within the housing 168.

In an embodiment, the lamp 102 may be a light emitting diode light tube.

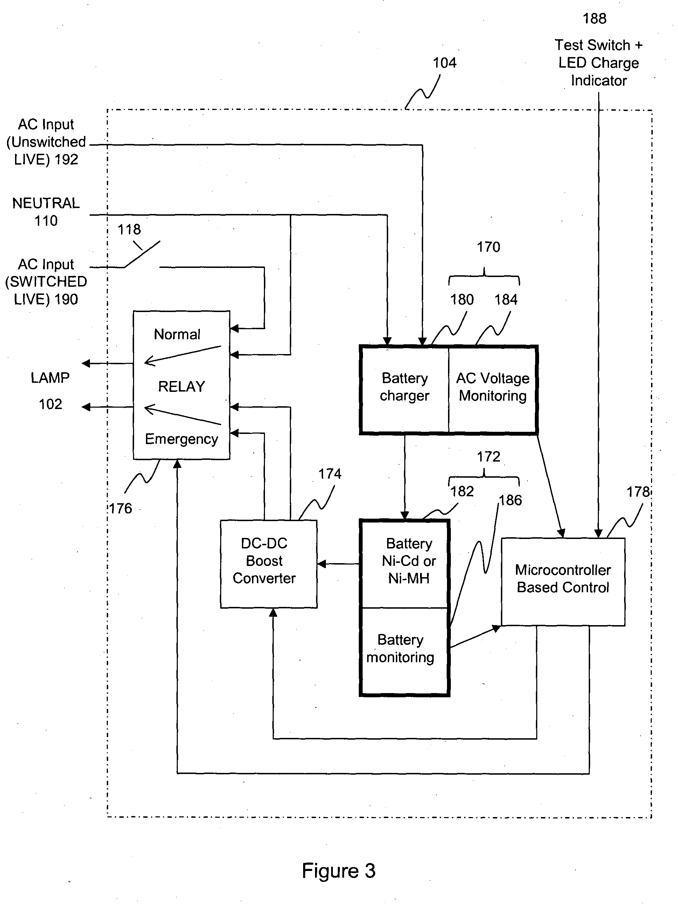

Fig. 3 shows a power supply system 104 according to an embodiment. The power supply system 104 includes a plurality of blocks, namely, a battery charger block 170, a battery block 172, a DC-DC boost converter 174, a relay 176 and a microcontroller based control block 178.

The battery charger block 170 includes a battery charger 180 configured to allow charging of a battery 182 in a constant current mode when the battery 182 is not fully charged. The battery charger block 170 also includes an AC voltage monitoring circuit 184 which is fed to the microcontroller based control block 178 to determine whether an AC supply is present in the power supply system 104.

The battery block 172 includes the battery 182 and a battery monitoring module 186. The battery block 172 is coupled to the battery charger block 170 and is configured to be the backup power source for the emergency lighting system. Backup sources can be Ni-Cd or Ni-MH batteries or can also be other types of batteries or other energy storage devices. The battery block 172 is coupled to the microcontroller based control block 178 such that the battery voltage is being monitored by the microcontroller based control block 178 to monitor the charge and discharge states of the battery 182.

The DC-DC boost converter 174 is coupled to the battery block 172 and configured to receive an output from the battery 182. The DC-DC boost converter 174 includes a circuit configured to step up the DC battery voltage output from the battery 182 to a high DC voltage.

The DC-DC boost converter 174 is coupled to the relay 176 and the relay 176 acts as a switch to multiplex between an AC voltage or DC voltage to the LED lamp 102 during normal and emergency mode.

The microcontroller based control block 178 is configured to monitor whether a power failure has occurred by monitoring the AC voltage to the power supply system 104. In the event of a power failure, the DC-DC boost converter 174 will be enabled and the relay 176 will be switched to the position where the DC voltage from the DC-C boost converter 174 will be supplied to the LED lamp 102. Other tasks of the microcontroller 178 include battery states monitoring and other housekeeping task like Charge LED control and Test switch monitoring. As can be seen in Fig. 3, the test switch and LED charge indicator signals 188 are interface to the microcontroller based control block 178.

In a normal situation when the lamp 102 is being supplied with the power from the main power supply 106, a SWITCHED live connection 190 and a neutral connection 110 are fed to the relay 176 before being supplied to a lamp 102. The supply of the SWITCHED live connection 190 to the lamp 102 is controlled by a switch 118 present before the input of the relay 176. Therefore, should there be a requirement to turn on the lamp 102, the switch 118 will be activated. At the same time, an UNSWITCHED LIVE connection 192 and the neutral connection 110 are continuously being fed to the battery charger 180 which is then used to charge the battery 182 for use when required.

In an emergency situation when the lamp 102 is being supplied with the power from the secondary power supply or the battery 182, the relay 176 switched to the emergency mode and only the supply from the battery 182 is being fed to the lamp 102.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A lamp system (100) comprising:
a lamp (102) comprising:
a housing (168);
a light source (144) ; and
a control circuitry (146) coupled to the light source (144), the control circuitry (146) comprising:
an input (148) configured to receive a single power (142) from a power supply system (104);
an output (150) connected to the light source (144) for supplying an electrical current (152) to the light source (144);
a determining block (154) connected to the input (148) and configured to determine, when the lamp (102) is in use, whether the single power (142) received at the input (148) is from a main power supply (106) or a secondary power supply (112) and to generate a corresponding determined signal (156);
a control block (158) coupled to the determining block (154) and configured to receive the determined signal (156) and to generate a control signal (160) based on the determined signal (156); and
a conversion block (162) coupled between the input (148) and the output (150) and configured to receive the control signal (160) and to convert the single power (142) from the main power supply (106) or the secondary power supply (112) to the electrical current (152), wherein the intensity of the electrical current (152) is controlled by the control signal (160);
wherein the light source (144) and the control circuitry (146) are arranged within the housing (168); and
the power supply system (104) coupled to the lamp (102) and arranged outside the housing (168) of the lamp (102), wherein the power supply system (104) is configured to provide the single power (142) supplied from the main power supply (106) and, alternatively, from the secondary power supply (112) to the input (148) of the control circuitry (146).

2. The lamp system (100) according to claim 1, wherein the main power supply (106) comprises an AC power supply and the secondary power supply (112) comprises a DC power supply.

3. The lamp system (100) according to claim 1 or 2, wherein the electrical current (152) is fed back to the control block (158) to modify the control signal (160) so as to regulate the intensity of the electrical current (152).

4. The lamp system (100) according to any one of claims 1 to 3,
wherein the light source (144) is an electrical current driven light source; or wherein the light source (144) is a light-emitting diode.

5. The lamp system (100) according to any one of claims 1 to 4, wherein the control circuitry (146) further comprises an input stage (164) coupled between the input (148) on one end and the conversion block (162) and the determining block (154) on another end, the input stage (164) configured to receive and process the single power (142) from the main power supply (106) or the secondary power supply (112) to generate a processed power signal (166).

6. The lamp system (100) according to claim 5, wherein the input stage (164) comprises at least one or a combination of a filter, an overload protection circuit and a rectifier.

7. The lamp system (100) according to any one of claims 2 to 6, wherein the conversion block (162) comprises an AC to DC voltage to current converter to convert the single power (142) from the AC power supply, and a DC to DC voltage to current converter to convert the single power (142) from the DC power supply.

8. The lamp system (100) according to any one of claims 1 to 7, wherein the intensity of the electrical current (152) controls the brightness of the lamp (102).

9. The lamp system (100) according to any one of claims 1 to 8, wherein the lamp (102) is a light emitting diode light tube.

10. The lamp system (100) according to any one of claims 1 to 9, wherein the power supply system (104) is configured so that the power output therefrom is determined by the electrical current (152) supplied to the light source (144).

11. The lamp system (100) according to any one of claims 1 to 10, wherein the power supply system (104) further comprises a controller (178) configured to control whether the single power is drawn from the main power supply (106) or from the secondary power supply (112).

## Patentansprüche

1. Ein Lampensystem (100), aufweisend:
eine Lampe (102), aufweisend:
ein Gehäuse (168),
eine Lichtquelle (144), und
eine Steuerschaltung (146), welche mit der Lichtquelle (144) verbunden ist, wobei die Steuerschaltung (146) aufweist:
einen Eingang (148), der konfiguriert ist, um einen Einzelstrom (142) von einem Stromversorgungssystem (104) zu empfangen,
einen Ausgang (150), welcher mit der Lichtquelle (144) verbunden ist zum Bereitstellen eines elektrischen Stroms (152) an die Lichtquelle (144),
einen Ermittlungsblock (154), welcher mit dem Eingang (148) verbunden ist und konfiguriert ist, um zu ermitteln, wenn die Lampe (102) in Betrieb ist, ob der an dem Eingang (148) empfangene Einzelstrom (142) von einer Haupt-Stromversorgung (106) stammt oder von einer Sekundär-Stromversorgung (112), und um ein entsprechendes Ermittlung-Signal (156) zu erzeugen,
einen Steuerblock (158), welcher mit dem Ermittlungsblock (154) verbunden ist und welcher konfiguriert ist zum Empfangen des Ermittlung-Signals (156) und zum Erzeugen eines Steuersignals (160) basierend auf dem Ermittlung-Signal (156), und
einen Umwandlungsblock (162), welcher zwischen den Eingang (148) und den Ausgang (150) geschaltet ist und welcher konfiguriert ist zum Empfangen des Steuersignals (160) und zum Umwandeln des Einzelstroms (142) von der Haupt-Stromversorgung (106) oder der Sekundär-Stromversorgung (112) in den elektrischen Strom (152), wobei die Intensität des elektrischen Stroms (152) durch das Steuersignal (160) gesteuert wird,
wobei die Lichtquelle (144) und die Steuerschaltung (146) innerhalb des Gehäuses (168) angeordnet sind, und
wobei das Stromversorgungssystem (104) mit der Lampe (102) verbunden ist und außerhalb des Gehäuses (168) der Lampe (102) angeordnet ist, wobei das Stromversorgungssystem (104) konfiguriert ist zum Bereitstellen des Einzelstroms (142), der von der Haupt-Stromversorgung (106) und, alternativ dazu, von der Sekundär-Stromversorgung (112) an den Eingang (148) der Steuerschaltung (146) bereitgestellt wird.

2. Das Lampensystem (100) gemäß Anspruch 1, wobei die Haupt-Stromversorgung (106) eine AC-Stromversorgung aufweist und die Sekundär-Stromversorgung (112) eine DC-Stromversorgung aufweist.

3. Das Lampensystem (100) gemäß Anspruch 1 oder 2, wobei der elektrische Strom (152) zu dem Steuerblock (158) zurückgeleitet wird, um das Steuersignal (160) so zu modifizieren, dass es die Intensität des elektrischen Stroms (152) reguliert.

4. Das Lampensystem (100) gemäß irgendeinem der Ansprüche 1 bis 3, wobei die Lichtquelle (144) eine mit elektrischem Strom betriebene Lichtquelle ist,
oder wobei die Lichtquelle (144) eine lichtemittierende Diode ist.

5. Das Lampensystem (100) gemäß irgendeinem der Ansprüche 1 bis 4, wobei die Steuerschaltung (146) ferner eine Eingangsstufe (164) aufweist, die zwischen den Eingang (148) an einem Ende und den Umwandlungsblock (162) und den Ermittlungsblock (154) an einem anderen Ende geschaltet ist, wobei die Eingangsstufe (164) konfiguriert ist zum Empfangen und Verarbeiten des Einzelstroms (142) von der Haupt-Stromversorgung (106) oder der Sekundär-Stromversorgung (112), um ein Verarbeitung-Stromsignal (166) zu erzeugen.

6. Das Lampensystem (100) gemäß Anspruch 5, wobei die Eingangsstufe (164) aufweist mindestens eines oder eine Kombination von einem Filter, einer Überlast-Schutzschaltung und einem Gleichrichter.

7. Das Lampensystem (100) gemäß irgendeinem der Ansprüche 2 bis 6, wobei der Umwandlungsblock (162) einen AC-DC-Spannung-Stromwandler aufweist zum Umwandeln des Einzelstroms (142) von der AC-Stromversorgung, und einen DC-DC-Spannung-Stromwandler zum Umwandeln des Einzelstroms (142) von der DC-Stromversorgung.

8. Das Lampensystem (100) gemäß irgendeinem der Ansprüche 1 bis 7, wobei die Intensität des elektrischen Stroms (152) die Helligkeit der Lampe (102) steuert.

9. Das Lampensystem (100) gemäß irgendeinem der Ansprüche 1 bis 8, wobei die Lampe (102) eine Lichtemittierende-Diode-Leuchtröhre ist.

10. Das Lampensystem (100) gemäß irgendeinem der Ansprüche 1 bis 9, wobei das Stromversorgungssystem (104) so konfiguriert ist, dass der Stromausgang davon bestimmt wird durch den an die Lichtquelle (144) bereitgestellten elektrischen Strom (152).

11. Das Lampensystem (100) gemäß irgendeinem der Ansprüche 1 bis 10, wobei das Stromversorgungssystem (104) ferner eine Steuereinheit (178) aufweist, die konfiguriert ist, um zu steuern, ob der Einzelstrom von der Haupt-Stromversorgung (106) oder von der Sekundär-Stromversorgung (112) bezogen wird.

## Revendications

1. Système de lampe (100) comprenant :
une lampe (102) comprenant :
une enceinte (168) ;
une source de lumière (144) ; et
des circuits de commande (146) reliés à la source de lumière (144), les circuits de commande (146) comprenant :
une entrée (148) configurée pour recevoir une seule énergie (142) de la part d'un système d'alimentation en énergie (104) ;
une sortie (150) reliée à la source de lumière (144) afin de fournir un courant électrique (152) à la source de lumière (144) ;
un bloc de détermination (154) relié à l'entrée (148) et configuré pour déterminer, lorsque la lampe (102) est utilisée, si l'énergie unique (142) reçue au niveau de l'entrée (148) provient d'une alimentation principale (106) ou d'une alimentation secondaire (112), et pour générer un signal déterminé correspondant (156) ;
un bloc de commande (158) relié au bloc de détermination (154) et configuré pour recevoir le signal déterminé (156) et pour générer un signal de commande (160) sur la base du signal déterminé (156) ; et
un bloc de conversion (162) relié entre l'entrée (148) et la sortie (150) et configuré pour recevoir le signal de commande (160) et pour convertir l'énergie unique (142) qui provient de l'alimentation principale (106) ou de l'alimentation secondaire (112) en courant électrique (152), l'intensité du courant électrique (152) étant contrôlée par le signal de commande (160) ;
dans lequel la source de lumière (144) et les circuits de commande (146) sont prévus dans l'enceinte (168) ; et
le système d'alimentation en énergie (104) est relié à la lampe (102) et prévu à l'extérieur de l'enceinte (168) de la lampe (102), le système d'alimentation en énergie (104) étant configuré pour fournir l'énergie unique (142) fournie par l'alimentation principale (106) et, en variante, par l'alimentation secondaire (112), à l'entrée (148) des circuits de commande (146).

2. Système de lampe (100) selon la revendication 1, dans lequel l'alimentation principale (106) comprend une alimentation CA et l'alimentation secondaire (112) comprend une alimentation CC.

3. Système de lampe (100) selon la revendication 1 ou 2, dans lequel le courant électrique (152) est fourni au bloc de commande (158) afin de modifier le signal de commande (160) de façon à réguler l'intensité du courant électrique (152).

4. Système de lampe (100) selon l'une quelconque des revendications 1 à 3,
dans lequel la source de lumière (144) est une source de lumière entraînée par un courant électrique ;
ou dans lequel la source de lumière (144) est une diode électroluminescente.

5. Système de lampe (100) selon l'une quelconque des revendications 1 à 4, dans lequel les circuits de commande (146) comprennent en outre un étage d'entrée (164) relié entre l'entrée (148) à une extrémité et le bloc de conversion (162) et le bloc de détermination (154) à une autre extrémité, l'étage d'entrée (164) étant configuré pour recevoir et traiter l'énergie unique (142) qui provient de l'alimentation principale (106) ou de l'alimentation secondaire (112) afin de générer un signal de puissance traité (166).

6. Système de lampe (100) selon la revendication 5, dans lequel l'étage d'entrée (164) comprend au moins l'un ou une combinaison d'un filtre, d'un circuit de protection contre les surcharges et d'un redresseur.

7. Système de lampe (100) selon l'une quelconque des revendications 2 à 6, dans lequel le bloc de conversion (162) comprend un convertisseur de tension en courant CA/CC destiné à convertir l'énergie (142) qui provient de l'alimentation CA, et un convertisseur de tension en courant CC/CC destiné à convertir l'énergie (142) qui provient de l'alimentation CC.

8. Système de lampe (100) selon l'une quelconque des revendications 1 à 7, dans lequel l'intensité du courant électrique (152) contrôle la luminosité de la lampe (102).

9. Système de lampe (100) selon l'une quelconque des revendications 1 à 8, dans lequel la lampe (102) est un tube d'éclairage à diode électroluminescente.

10. Système de lampe (100) selon l'une quelconque des revendications 1 à 9, dans lequel le système d'alimentation en énergie (104) est configuré de sorte que l'énergie délivré par celui-ci soit déterminée par le courant électrique (152) fourni à la source de lumière (144).

11. Système de lampe (100) selon l'une quelconque des revendications 1 à 10, dans lequel le système d'alimentation en énergie (104) comprend en outre un contrôleur (178) configuré pour contrôler si l'énergie est fournie par l'alimentation principale (106) ou par l'alimentation secondaire (112).
